# EUROPEAN PATENT APPLICATION

(11) **EP 1 630 930 A2**
(43) Date of publication of application: **01.03.2006**
(21) Application number: 05013804.9
(22) Date of filing: 27.06.2005
(51) Int. Cl.: H02K 1/20, H02K 9/19

(54) **Liquid cooled switched reluctance electric machine**

(30) Priority: 27.08.2004 US 927481
(71) Applicant: CATERPILLAR INC., Peoria Illinois 61629-6490 (US)
(72) Inventor: Adra, Rodwan T., c/o Caterpillar Inc., Peoria Illinois 61629-6490 (US)
(74) Representative: Wagner, Karl H.

(57) **Abstract**

An electric machine (16) has a shaft (34) and a rotor (36) connected to the shaft. The electric machine also has a stator (38) axially aligned with the rotor and disposed radially outward from the rotor. The stator has a plurality of poles (48), a winding (54) of wire disposed around each of the plurality of poles, and at least one tube (74, 82). The at least one tube is disposed between the windings of wire associated with adjacent poles of the plurality of poles and is configured to hold a liquid. The electric machine further has a housing (40) enclosing the shaft, rotor, and stator.

## Description

### Technical Field

The present disclosure relates generally to a switched reluctance electric machine and, more particularly, to a liquid cooled switched reluctance electric machine.

### Background

Switched reluctance (SR) electric machines such as, for example, motors and generators may be used to generate mechanical power in response to an electrical input or to generate electrical power in response to a mechanical input. Magnetic, resistive, and mechanical losses within the motors and generators during mechanical and electrical power generation cause a build up of heat, which may be dissipated to avoid malfunction and/or failure of the SR electric machine. One of the limitations on the power output of the SR electric machines may be the capacity of the SR electric machine to dissipate this heat.

One method of dissipating heat within an electric machine includes utilizing a liquid cooled stator jacket. For example, U.S. Patent No. 5,448,118 (the '118 patent) to Nakamura et al. teaches a liquid cooled motor having a rotor, a coaxial stator, and a liquid cooled stator jacket enclosing the stator. The liquid cooled jacket is extruded to form a plurality of conduits along a longitudinal direction. A cooling medium is circulated from a pump, through the plurality of conduits, through a radiator, and back to the pump. During circulation, the cooling medium absorbs heat from the stator, thereby removing heat from the motor.

Although the liquid cooled stator jacket may remove some heat from some portions of the motor of the '118 patent, it may remove too little heat. In particular, because the plurality of conduits are radially removed from coils within the stator that produce significant amounts of heat, the plurality of conduits may be ineffective for removing substantial amounts of heat from the stator.

The disclosed switched reluctance electric machine is directed to overcoming one or more of the problems set forth above.

### Summary of the Invention

In one aspect, the present disclosure is directed to a switched reluctance electric machine that includes a shaft and a rotor connected to the shaft. The switched reluctance electric machine also includes a stator axially aligned with the rotor and disposed radially outward from the rotor. The stator has a plurality of teeth, a winding of wire disposed around each of the plurality of teeth to form a plurality of poles, and at least one tube configured to hold a heat-transferring medium. The at least one tube is disposed between the windings of wire associated with adjacent poles of the plurality of poles and is configured to hold a heat-transferring medium. The switched reluctance electric machine further includes a housing enclosing the shaft, rotor, and stator.

In another aspect, the present disclosure is directed to a method of operating a switched reluctance electric machine. The method includes rotating a rotor within a stationary stator having a plurality of teeth and a winding of wire disposed around each of the plurality of teeth to form a plurality of poles. The method further includes directing a heat-transferring medium into at least one tube disposed between windings of wire associated with adjacent poles of the plurality of poles.

### Brief Description of the Drawings

Fig. 1 is a diagrammatic illustration of an exemplary disclosed power system having a switched reluctance electric machine;
Fig. 2 is a cross-sectional side view illustration of the switched reluctance electric machine of Fig. 1;
Fig. 3 is a cross-sectional end view illustration of the switched reluctance electric machine of Figs. 1 and 2;
Fig. 4 is a pictorial view illustration of an exemplary disclosed cooling structure for the switched reluctance electric machine of Figs. 1-3; and
Fig. 5 is a pictorial view illustration of an exemplary disclosed cooling structure for the switched reluctance electric machine of Figs. 1-3.

### Detailed Description

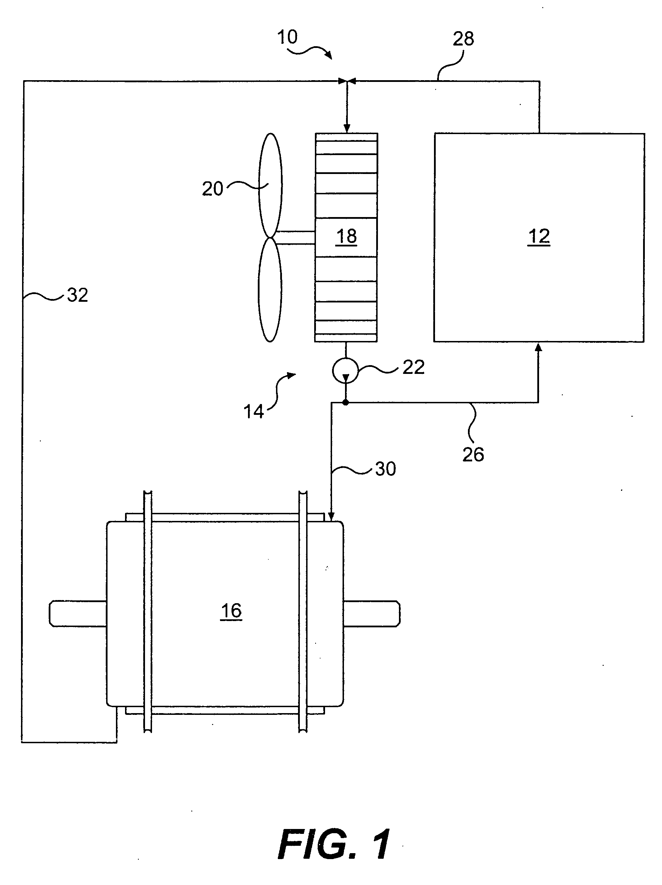

Fig. 1 illustrates an exemplary power system 10 having a power source 12, a cooling system 14, and a switched reluctance (SR) electric machine 16. Power system 10 may form a portion of a work machine (not shown) such as, for example, a dozer, an articulated truck, an excavator, or any other work machine known in the art, with SR electric machine 16 functioning as a main propulsion unit of the work machine.

Power source 12 may include any source of power known in the art that utilizes a central cooling system. In particular, power source 12 may include an internal combustion engine such as, for example, a diesel engine, a gasoline engine, a natural gas engine, or any other engine apparent to one skilled in the art. Power source 12 may, alternately, include another source of power such as a furnace, a fuel cell, a battery, or any other source of power known in the art. It is contemplated that power source 12 may be omitted if desired, and cooling system 14 dedicated to transferring heat only with respect to SR electric machine 16.

Cooling system 14 may be a pressurized system configured to transfer heat to or from power source 12 and/or SR electric machine 16. Cooling system 14 may include a heat exchanger 18, a fan 20, and a source 22 configured to pressurize a heat-transferring medium.

Heat exchanger 18 may be an air-to-air heat exchanger, a liquid-to-air heat exchanger, or a liquid-to-liquid heat exchanger and configured to facilitate the transfer of heat to or from the heat transferring medium. For example, heat exchanger 18 may include a tube and shell type heat exchanger, a plate type heat exchanger, or any other type of heat exchanger known in the art. Heat exchanger 18 may be connected to power source 12 via a supply conduit 26 and a return conduit 28, and connected to SR electric machine 16 via a supply conduit 30 and a return conduit 32. It is contemplated that heat exchanger 18 may function as the main radiator of power source 12, the engine oil cooler, the transmission oil cooler, the brake oil cooler, or any other cooling component of power source 12. It is further contemplated that heat exchanger 18 may be dedicated to conditioning only the heat-transferring medium supplied to SR electric machine 16.

Fan 20 may be disposed proximal to heat exchanger 18 and configured to produce a flow of air across heat exchanger 18 for liquid-to-air heat transfer. It is contemplated that fan 20 may be omitted if desired, and a secondary fluid circuit (not shown) connected to heat exchanger 18 to transfer heat to or from the heat transferring medium for liquid-to-liquid heat transfer.

Source 22 may be any device for pressurizing the heat-transferring medium within cooling system 14. For example, source 22 may include a fixed displacement pump, a variable displacement pump, a variable flow pump, or any other pump known in the art. Source 22 may be disposed between heat exchanger 18 and supply conduits 26 and 30, and driven hydraulically, mechanically, or electrically by power source 12. It is contemplated that source 22 may, alternately, be located remotely from power source 12 and driven by a means other than power source 12. It is also contemplated that source 22 may be dedicated to pressurizing only the heat-transferring medium directed to SR electric machine 16.

The heat-transferring medium may be a low-pressure fluid or a high-pressure fluid. Low-pressures fluids may include, for example, water, glycol, a water-glycol mixture, a blended air mixture, a power source oil such as transmission oil, engine oil, brake oil, or diesel fuel, or any other low-pressure fluid known in the art for transferring heat. High-pressure fluids may include, for example, R-134, propane, nitrogen, helium, or any other high-pressure fluid known in the art.

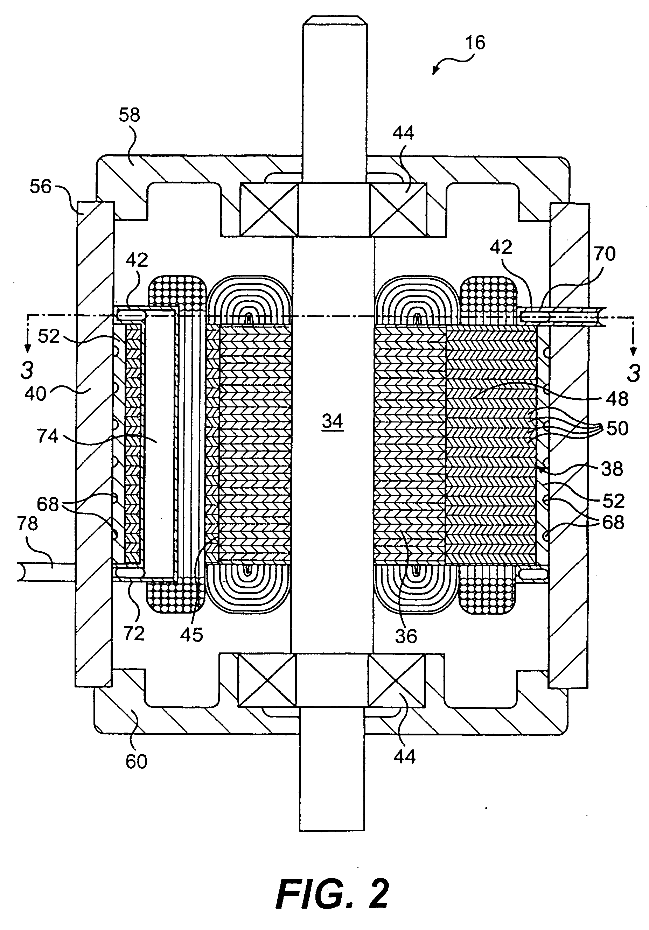

Fig. 2 illustrates SR electric machine 16 having various components that interact to produce electrical power in response to a mechanical input and/or to produce mechanical power in response to an electrical input. In particular, SR electric machine 16 may include a shaft 34, a rotor 36, a stator 38, a housing 40, and a cooling structure 42. It is contemplated that electric machine 16 may contain additional or different components such as, for example, a control system, a processor, power electronics, one or more sensors, a power storage device, and/or other components known in the art.

Shaft 34 may be a cylindrical coupling member for transferring power into and/or out of electric machine 16 and may be rotatably connected to housing 40 via one or more bearings 44. Shaft 34 may protrude from two opposite ends of housing 40. It is also contemplated that shaft 34 may protrude from only one end of housing 40 and/or that multiple shafts may be included within SR electric machine 16.

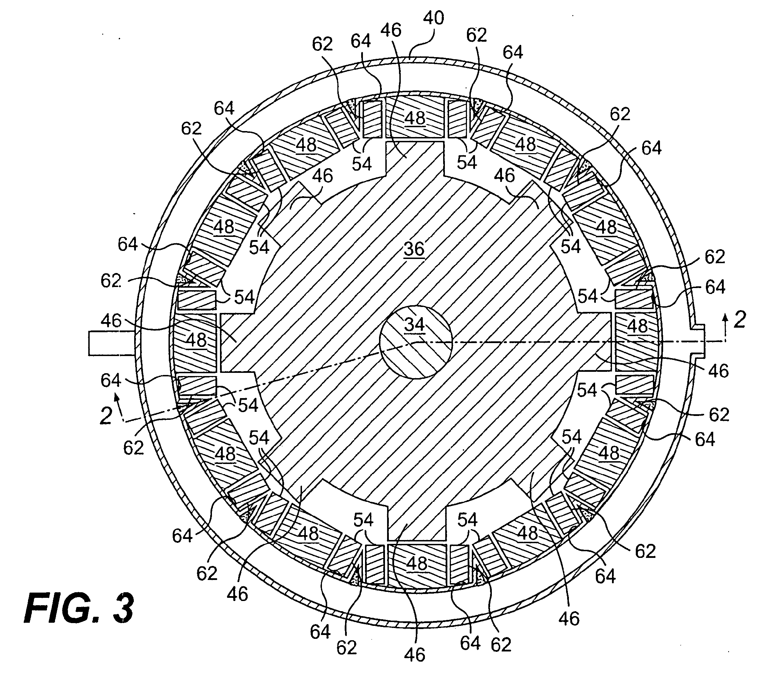

Rotor 36 may be fixedly connected to shaft 34 and configured to interact with an electrically induced magnetic field within SR electric machine 16 to cause a rotation of shaft 34. Specifically, rotor 36 may include a stack of steel laminations 45 having multiple protruding portions 46 (referring to Fig. 3), also known as rotor teeth. The laminations may be fastened to shaft 34, for example, by interference fit, by welding, by threaded fastening, by chemical bonding, or in any other appropriate manner. As each protruding portion 46 interacts with the magnetic field, a torque may be produced that rotates shaft 34.

Stator 38 may be fixed to housing 40 and configured to produce the electrically induced magnetic field that interacts with protruding portions 46 of laminations 45. As illustrated in Figs. 2 and 3, stator 38 may include laminations of steel having protruding portions 48, also known as stator teeth, that extend inward from an iron sleeve 52, and windings 54 of copper wire inserted onto and epoxied to each protruding portion 48 to form a plurality of poles. As electrical current is sequentially applied to windings 54 a rotating magnetic field through the plurality of poles is generated.

Housing 40 may be configured to house shaft 34, rotor 36, stator 38, and cooling structure 42. Housing 40 may include a shell 56, a first end cap 58, and a second end cap 60. Shell 56 may annularly enclose shaft 34, rotor 36, stator 38, and cooling structure 42, and connect to first and second end caps 58, 60. First and second end caps 58, 60 may house bearings 44 and each include a centrally located through-hole that allows the extension of shaft 32 through housing 40.

As illustrated in Fig. 3, windings 54 may naturally form generally closed 3-sided elongated voids 62 within stator 38. Specifically, protruding portions 48 may be elongated box-like structures that are annularly disposed around rotor 36 at equally spaced intervals such that equally spaced elongated box-like pockets 64 are formed between protruding portions 48 and radially between rotor 36 and sleeve 52. As the copper wire of windings 54 is wrapped around each protruding portion 48, elongated box-like copper sections are formed to either side of each protruding portion 48. Two opposing copper sections of adjacent windings 54 are disposed within each pocket 64 such that void 62 is formed. In particular, void 62 may be naturally formed from an inner annular surface of the stator laminations (referring to Fig. 2) intersecting outer surfaces of opposing windings 54.

As illustrated in Fig. 2, in addition to cooling structure 42, iron sleeve 52 may provide for heat transfer to and from stator 38. In particular, iron sleeve 52 may include one or more annular grooves 68 in an outer surface of iron sleeve 52 that together with an inner annular surface of shell 56 form one or more fluid passageways. Either of shell 56 or sleeve 52 may include a dedicated inlet and an outlet (not shown) to allow the transfer of the heat-transferring medium through grooves 68 to thereby thermally communicate with stator 38. It is contemplated that grooves 68 may alternately be fluidly connected with cooling structure 42. It is also contemplated that sleeve 52 may be omitted, if desired, or retained and grooves 68 omitted.

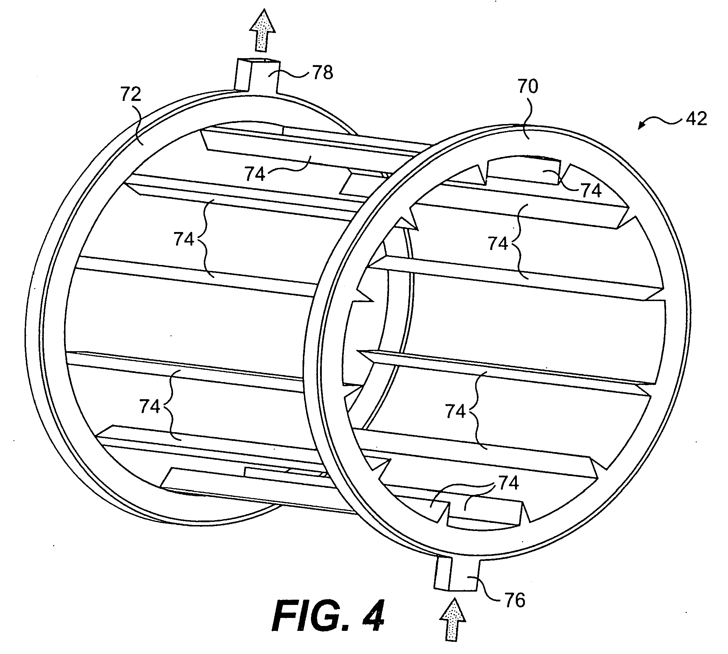

As illustrated in Fig. 4, cooling structure 42 may be configured to transfer heat to and/or from SR electric machine 16 and may include an inlet manifold 70, an outlet manifold 72, and a plurality of tubes 74 disposed between inlet and outlet manifolds 70, 72 in parallel relation. Inlet manifold 70 may include a hollow annular structure fluidly connected to one end of each of tubes 74 and an inlet port 76. Inlet manifold 70 may be configured to direct the heat-transferring medium from cooling system 14 through tubes 74. Outlet manifold 72 may include a hollow annular structure fluidly connected to one end of each tubes 74 opposite inlet manifold 70, and an outlet port 78. Outlet manifold 72 may be configured to direct the heat-transferring medium from tubes 74 to cooling system 14. Both inlet manifold and outlet manifold may be in substantial contact with opposite ends of windings 54 to thereby conduct some heat to or away from the ends of windings 54 (referring to Fig. 2).

One tube 74 may be disposed within each of voids 62 to remove heat from stator 38. Specifically, fluid may be directed into inlet manifold 70 of SR electric machine 16 via inlet port 76, through tubes 74 where heat is either absorbed or imparted to windings 54, and out of outlet manifold 72 via outlet port 78. In order to improve maximize heat transfer efficiency, each of tubes 74 may have a triangular cross-section that substantially fills void 62 between windings 54. It is contemplated that each of tubes 74 may alternately have a cross-sectional shape other than triangular such as, for example, round, oval, square, or any other appropriate shape known in the art.

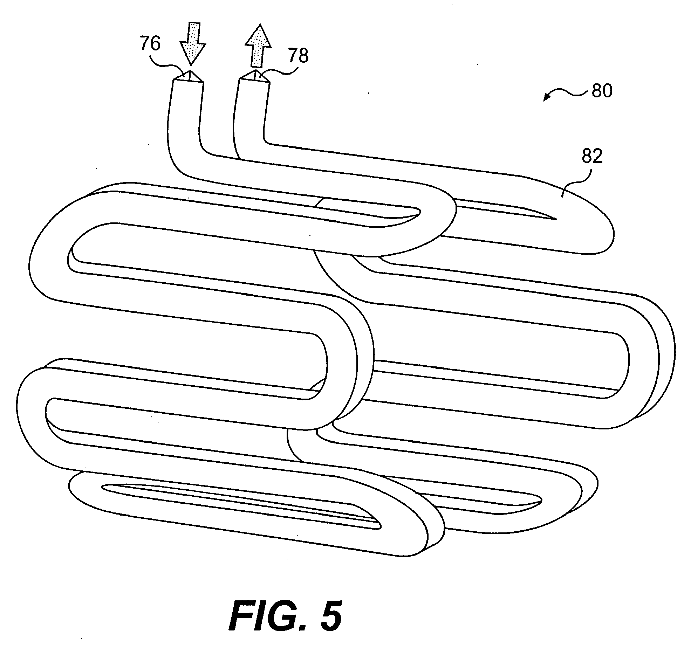

Fig. 5 illustrates an alternative cooling structure 80 having a single tube 82 in place of the plurality of tubes 74 of cooling structure 42 to transfer heat with stator 38. In particular, tube 82 may be routed through each of voids 62 and directly connected to supply and return conduits 30 and 32, thereby eliminating the need for inlet and outlet manifolds 70, 72. In addition to transferring heat from the elongated sections of windings 54, end turns of tube 82 may be in substantial contact with ends of windings 54 for additional heat transfer. Similar to tubes 74, tube 82 may have a triangular cross-sectional area that substantially fills void 62.

After the placement of either tubes 74 or 82 between windings 54 of stator 38 during the assembly process, stator 38 may be dipped into an epoxy to chemically bond the components of stator 38 together. The epoxy used for this bonding process may be thermally conductive to increase thermal transfer within SR electric machine 16. When dipped into the epoxy, any remaining space within void 62 may be substantially filled with epoxy, thereby improving thermal transfer between windings 54 and tubes 74 or 82.

### Industrial Applicability

The disclosed electric machine finds potential application in any power system where it is desirous to control heat dissipation within a switched reluctance electric machine. The disclosed SR electric machine finds particular applicability in vehicle drive systems. One skilled in the art will recognize that the disclosed SR electric machine could be utilized in relation to other drive systems that may or may not be associated with a vehicle.

Referring to Fig. 1, when drive system 10 is in operation, the heat-transferring medium, conditioned (heated or cooled) by heat exchanger 18, may be pumped by source 22 through power source 12 and/or SR electric machine 16. As the heat-transferring medium courses through power source 12 and/or SR electric machine 16, heat may be continuously transferred to or from power source 12 and/or SR electric machine 16. Upon exiting SR electric machine 16, the flow of the heat-transferring medium from SR electric machine 16 may be directed to rejoin the flow of the heat-transferring medium exiting power source 12 where both flows may then be routed through heat exchanger 18 to either expel heat or absorb heat during a conditioning process.

As illustrated in Fig. 4, when the flow of the heat-transferring medium enters SR electric machine 16 by way of inlet port 76, it may first be directed through inlet manifold 70 wherein the flow may be distributed to each of tubes 74. Upon exiting tubes 74, the flow may travel away from SR electric machine 16 by way of outlet manifold 72 and outlet port 78.

In the alternate cooling structure embodiment of Fig. 5, the flow of the heat-transferring medium may enter SR electric machine 16 by way of inlet port 76, but may flow between each adjacent winding 54 of wire by way of tube 82. After transferring heat with each winding 54, the heat-transferring medium may flow from SR electric machine 16 by way of outlet port 78.

In addition to directing the heat-transferring medium through tubes 74 or 82 between windings 54, stator 38 may be cooled in an additional manner. In particular, the heat-transferring medium may be simultaneously directed through grooves 68 of sleeve 52 to cool outer surfaces of windings 54 and protruding portions 48.

Several advantages are realized because the cooling paths of SR electric machine 16 are both within and around stator 38. Cooling both inner and outer surfaces of stator 38 may increase the cooling capacity of SR electric machine 16 as compared to only cooling the outer surface of stator 38. Greater cooling efficiency of SR electric machine 16 may be realized because cooling tubes 74 and 82 are located immediately adjacent those components within stator 38 that tend to generate the greatest amount of heat. In addition, because naturally existing voids within SR electric machine 16 are used for the disposition of tubes 74 and 82, the overall size of the SR electric machine may remain substantially unchanged.

It will be apparent to those skilled in the art that various modifications and variations can be made to the SR electric machine of the present disclosure. Other embodiments of the SR electric machine will be apparent to those skilled in the art from consideration of the specification and practice of the invention disclosed herein. It is intended that the specification and examples be considered as exemplary only, with a true scope of the invention being indicated by the following claims and their equivalents.

## Claims

1. An electric machine (16), comprising:
a shaft (34);
a rotor (36) connected to the shaft;
a stator (38) axially aligned with the rotor and disposed radially outward from the rotor, the stator having:
a plurality of poles (48);
a winding (54) of wire disposed around each of the plurality of poles; and
at least one tube (74, 82) disposed between the windings of wire associated with adjacent poles of the plurality of poles and configured to hold a liquid; and
a housing (40) enclosing the shaft, rotor, and stator.

2. The electric machine of claim 1, wherein the at least one tube includes a single tube (82) routed through the stator such that portions of the tube are disposed between the windings of wire associated with each of the plurality of poles.

3. The electric machine of claim 1, wherein the at least one tube includes a plurality of tubes (74), one of the plurality of tubes being disposed between the windings of wire associated with each of the plurality of poles.

4. The electric machine of claim 1, further including a sleeve (52) annularly surrounding the stator and having at least one fluid passageway (68), the sleeve configured to transfer heat with the stator.

5. A method of operating an electric machine (16), comprising:
rotating a rotor (36) within a stationary stator (38) having a plurality of poles (48) and a winding (54) of wire disposed around each of the plurality of poles; and
directing a liquid through at least one tube (74, 82) disposed between the windings of wire associated with adjacent poles of the plurality of poles.

6. The method of claim 5, wherein the liquid is cooled prior to direction through the at least one tube to remove heat from the stator.

7. The method of claim 5, wherein the liquid is heated prior to direction through the at least one tube to add heat to the stator.

8. The method of claim 5, wherein the at least one tube includes a plurality of tubes (74) and the liquid is directed into the plurality of tubes in parallel relation, via an inlet manifold (70) fluidly connected to each of the plurality of tubes.

9. The method of claim 5, further including directing the liquid through at least one fluid passageway (68) in a sleeve (52) annularly surrounding the stator.

10. A power system (10), comprising:
the electric machine (16), as in any one of claims 1-4; and
a cooling system (14) fluidly connected to the at least one tube (74, 82) and configured to condition a liquid directed through the at least one tube.
